Europäisches Patentamt

European Patent Office

Office européen des brevets

(19)

(11) Numéro de publication : **0 328 462 B1**

(12) **FASCICULE DE BREVET EUROPEEN**

(45) Date de publication du fascicule du brevet :
04.08.93 Bulletin 93/31

(51) Int. Cl.⁵ : **H04M 19/08**

(21) Numéro de dépôt : **89400399.5**

(22) Date de dépôt : **13.02.89**

(54) **Circuit intégré et appareil téléphonique télé-alimenté en comportant application.**

(30) Priorité : **11.02.88 FR 8801645**

(43) Date de publication de la demande :
**16.08.89 Bulletin 89/33**

(45) Mention de la délivrance du brevet :
**04.08.93 Bulletin 93/31**

(84) Etats contractants désignés :
**BE DE ES GB IT SE**

(56) Documents cités :
**EP-A- 0 169 584
FR-A- 2 538 661
FR-A- 2 601 538**

(56) Documents cités :
**GB-A- 2 135 854
TN NACHRICHTEN, no. 91, 1987, pages 3-14,
Frankfurt, DE; D. KRÄMER et al.:
"TN-Terminals im neuen Design"**

(73) Titulaire : **MATRA COMMUNICATION
50, rue du Président Sadate Creac'h Gwenn
F-29101 Quimper (FR)**

(72) Inventeur : **Marti, Franck
13, Allée des Primevères
F-29000 Quimper (FR)**

(74) Mandataire : **Fort, Jacques
CABINET PLASSERAUD 84, rue d'Amsterdam
F-75009 Paris (FR)**

## Description

La présente invention concerne les appareils téléphoniques, ce terme désignant tout ensemble comprenant un combiné téléphonique et des moyens permettant d'assurer les fonctions de transmission, de générer des signaux de numérotation d'appel sortant, et de réagir aux appels entrants ainsi que de remplir d'autres fonctions qui diffèrent suivant que l'ensemble est plus ou moins élaboré. Elle concerne plus particulièrement les appareils téléphoniques à télé-alimentation, dans lesquels la puissance électrique nécessaire au fonctionnement est fournie par le courant de la ligne téléphonique sur laquelle ils sont branchés.

Les appareils téléphoniques récents comportent des circuits électroniques pour remplir l'ensemble des fonctions requises. On peut généralement dissocier ces circuits en un interface de ligne, qui doit supporter des tensions élevées (250 à 300 Volts) et dissiper une puissance notable d'une part, des circuits analogiques et numériques pour lesquels la tension maximale est toujours nettement inférieure d'autre part.

Les appareils les plus simples remplissent uniquement des fonctions dites de bas niveau qui servent à la communication : émission et réception, numérotation signalisation des appels entrants (sonnerie) et souvent réception amplifiée sur haut-parleur. Les appareils élaborés comportent également des fonctions de niveau dit supérieur (par exemple répertoire, afficheur, télécommande, domotique, etc) pour lesquelles sont prévus des circuits particuliers. Il est également souhaitable de disposer d'un poste à numérotation mixte permettant la génération de signaux d'appel constitués par des trains d'impulsions en code décimal et par des fréquences vocales (en abrégé DTMF) suivant la recommandation Q23 du CCITT.

Dans un appareil à télé-alimentation, la présence de toutes ces fonctions, qui chacune exigent une puissance minimale pour fonctionner correctement, se traduit par un problème dû notamment à la nature très variable du courant continu de ligne. En France, compte tenu des longueurs de ligne, ce courant est normalement compris entre 28 et 50 mA et les normes imposent un fonctionnement satisfaisant de l'appareil dans toute cette plage de valeur. Mais très souvent le courant de ligne a une valeur très inférieure. Dans les appareils actuellement existants le dépassement du seuil de 28 mA vers le bas se traduit en général par des dégradations ou même l'absence des fonctions essentielles.

On connaît déjà (FR-A-2 538 661) un circuit intégré conforme au préambule de la revendication 1, n'incorporant cependant que des fonctions analogiques et de commande (numérotation, amplification de microphone, d'écouteur et de ligne), avec une répartition de courant de ligne entre les fonctions. Par ailleurs, le document DE-A-0 169 584 fait indépendamment connaître un circuit intégré de gestion de courant de ligne avec des affectations prioritaires.

La présente invention vise notamment à fournir un circuit intégré pour appareil téléphonique à télé-alimentation permettant de remplir de façon satisfaisante les fonctions essentielles de l'appareil même pour des courants de ligne notablement inférieurs au seuil de la plage de variation nominale.

Dans ce but, l'invention propose notamment un circuit intégré pour appareil téléphonique conforme à la partie caractérisante de la revendication 1.

Le circuit est avantageusement muni de moyens d'ajustement permettant de l'adapter aux normes des différents pays, souvent différentes des normes françaises : à titre d'exemple, la plage de variation nominale aux Etats-Unis va de 40 à 80 mA.

L'invention sera mieux comprise à la lecture de la description qui suit d'un mode particulier de réalisation donné à titre d'exemple non limitatif. La description se réfère aux dessins qui l'accompagnent dans lesquels :
- la figure 1 est un schéma de principe montrant la constitution d'un appareil téléphonique à téléalimentation de haut de gamme ;
- la figure 2 est un graphique donnant la caractéristique courant-tension nominale prévue sur les réseaux téléphoniques français et américain ;
- la figure 3 est un schéma montrant le partage du courant de ligne entre différentes fonctions ;
- la figure 4 est un synoptique montrant l'ensemble des moyens de gestion d'alimentation de la partie logique d'un circuit suivant l'invention ;
- la figure 5 montre une constitution possible de la self-inductance électronique prévue dans le synoptique de la figure 4 ;
- la figure 6 est un synoptique détaillé montrant le principe du partage des courants dans le circuit de la figure 4 ;
- la figure 7 est un schéma de moyens de régulation d'efficacité prévus dans le synoptique de la figure 4 ;
- la figure 8 est un schéma des moyens d'alimentation de l'amplificateur d'écoute amplifiée utilisable dans le synoptique de la figure 4 ;
- la figure 9 est un schéma des moyens d'alimentation fournissant la tension Vcc du synoptique de la figure 4 ;

- la figure 10 est un schéma simplifié de la chaîne de réception du synoptique de la figure 4 ;
- la figure 11 est une vue simplifiée de la chaîne d'écoute amplifiée du synoptique de la figure 4.

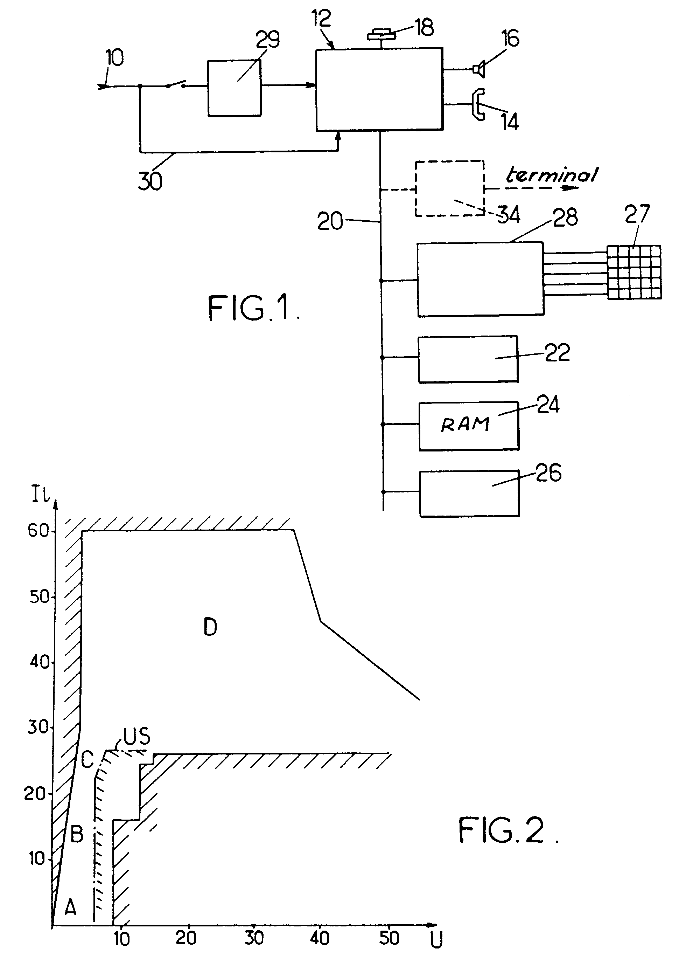

La figure 1 montre, à titre d'exemple, la constitution de principe d'un appareil téléphonique haut de gamme dont la puissance de fonctionnement est fournie par le courant de la ligne téléphonique 10 sur laquelle il est branché. Les circuits 12 assurant les fonctions de transmission, d'envoi et de réception des appels, éventuellement d'écoute amplifiée, sont reliés à un combiné 14 et, si la fonction d'écoute amplifiée est prévue, à un haut parleur 16. Une sonnerie 18 (ce terme désignant tout générateur de signal sonore tel qu'un trembleur) est également alimentée par les circuits. Dans le cas d'un appareil haut de gamme, les circuits 12 sont reliés à un bus série 20 auquel se raccordent des modules remplissant des fonctions annexes telles qu'afficheur 22, mémoire vive 24 de stockage d'adresses et de renumérotation, horloge 26, etc. Dans le cas d'un tel appareil de haut de gamme, la gestion est assurée par un module micro- processeur 28 auquel se raccorde le clavier à touches 27 de numérotation. Dans le cas d'un appareil de bas de gamme, ce clavier (clavier classique à 15 touches en général) est directement raccordé aux circuits 12 qui assurent la gestion.

Dans tous les cas, les circuits 12 sont reliés à la ligne par un interface de ligne 29, contourné par un conducteur 30 de passage des signaux d'appel. Les liaisons des circuits comportent en conséquence une paire téléphonique L1 et L2 et le fil de sonnerie S.

Dans le mode de mise en oeuvre de l'invention qui sera maintenant décrit, les circuits 12, aussi bien analogiques que numériques, sont intégrés sur une même puce semi-conductrice. Les circuits ainsi intégrés peuvent assurer l'ensemble des fonctions de l'appareil et permettre de l'associer avec un terminal (par l'intermédiaire d'un module d'isolement galvanique 34) ou un modem.

Ils assurent, dans le cas envisagé, les fonctions suivantes :

Partie analogique :    gestion des alimentations électriques, transmission, écoute amplifiée et anti-Larsen, sonnerie.

Partie logique et numérique :    microséquenceur, horloge, acquisition de données, numérotation, interface clavier et/ou bus série (distinct de l'interface de ligne).

Dans le cas d'un téléphone très haut de gamme, il est, à l'heure actuelle encore, avantageux de déporter la fonction interface clavier sur un circuit intégré distinct de celui qui assure les fonctions énumérées ci-dessus. Ce circuit distinct peut en effet être nécessaire pour d'autres raisons (gestion d'afficheur, extension de mémoire, domotique, etc).

Pour assurer cette intégration à grande échelle, les fonctions analogiques sont en règle générale assurées sur le circuit en technologie bipolaire tandis que les fonctions numériques sont implémentées en technologie CMOS.

Seules seront décrites les parties du circuit intégré qui sont originales et pour lesquelles une protection est recherchée dans le cadre du présent brevet.

Une fonction essentielle du circuit intégré suivant l'invention est constituée par la gestion du courant de ligne disponible de façon que les fonctions essentielles soient assurées en priorité, lorsque le courant de ligne est insuffisant pour assurer dans de bonnes conditions l'ensemble des fonctions. Les fonctions à remplir, en ordre de priorité décroissante, sont :

- les fonctions logiques ;
- les fonctions de transmission (réception et émission) ;
- l'écoute amplifiée.

Avant de décrire les circuits assurant la gestion de l'alimentation, il faut rappeler que, pour que l'appareil puisse être utilisé dans plusieurs pays, la caractéristique courant-tension U de l'appareil doit pouvoir être ajustée pour respecter le gabarit de l'application envisagée. La figure 2 montre, en traits pleins, le gabarit à régime permanent à respecter en France. Elle montre, en traits mixtes, le gabarit correspondant aux Etats-Unis. Dans le cas de la France la totalité des fonctionnalités de l'appareil doit être remplie lorsqu' on se trouve dans la zone D.

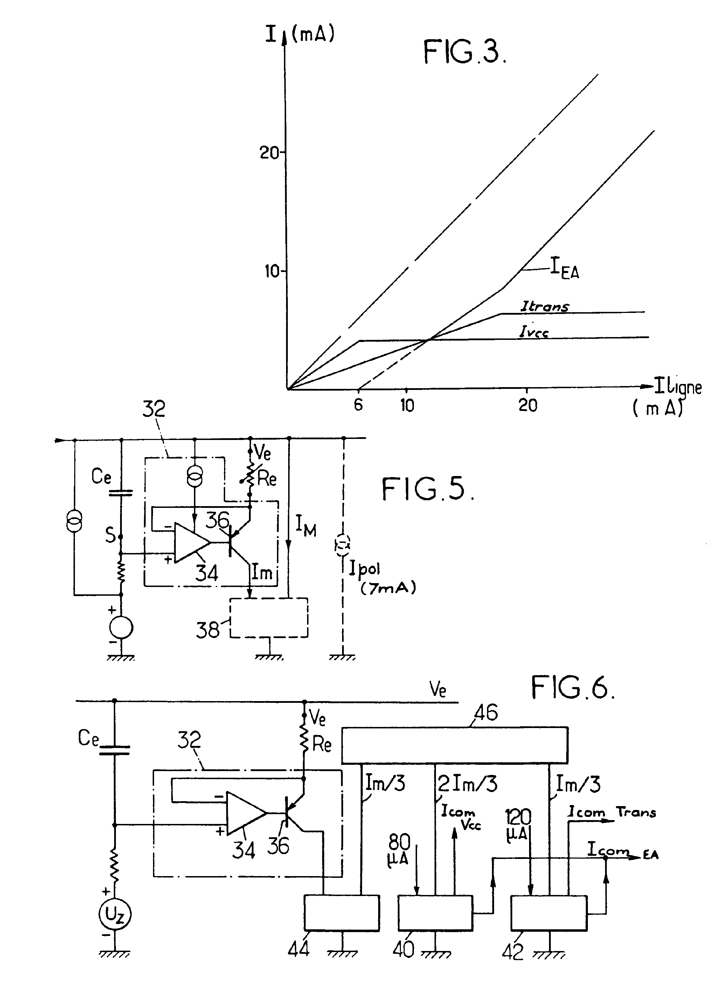

Dans le cas de la France, on peut notamment chercher à obtenir une répartition de courant du genre illustré en figure 3, où le courant total disponible est donné en abscisse et les différents courants consommés en ordonnée. Ces courants sont :

- le courant $I_{V_{cc}}$ d'alimentation des circuits logiques,
- le courant Itrans affecté à la transmission,
- le courant $I_{EA}$ affecté à l'écoute amplifée.

Cela se traduira, dans le cas de la figure 2, par le fait que :

- dans la zone A (Fig. 2), il n'y a pas de fonctionnement possible, sauf à proximité immédiate de la zone B,
- dans le bas de la zone B il y aura réception, avec des caractéristiques dégradées et dans le haut de cette même zone la transmission sera assurée de façon satisfaisante,

3

- dans les zones B et C l'écoute amplifiée sera également assurée dans des conditions d'autant meilleures que le courant disponible est plus élevé.

Le circuit intégré ou "puce" 12 comporte une partie analogique qui, en plus de cette fonction de gestion des alimentations, assurera, dans une application de haut de gamme, d'autres fonctions qui seront successivement décrites et dont certaines peuvent être omises.

## PARTIE ANALOGIQUE

### Gestion des alimentations

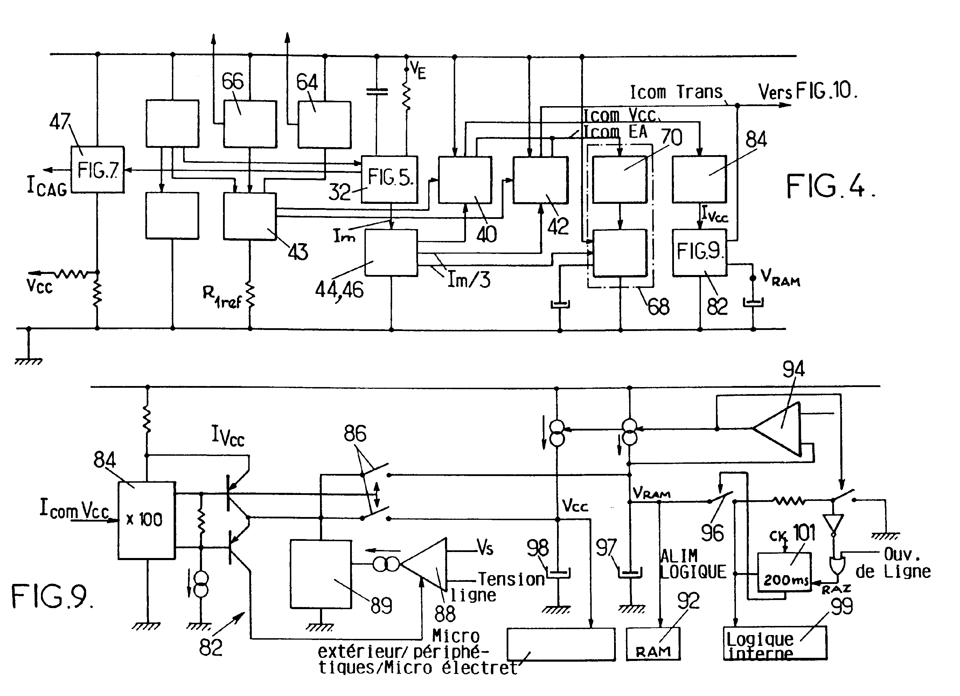

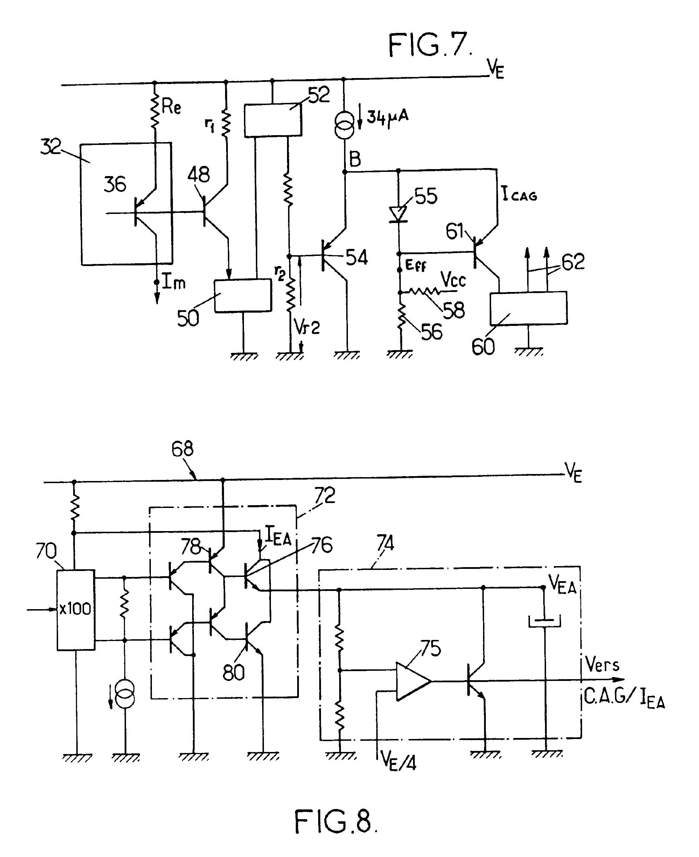

Le synoptique de la figure 4 montre le fractionnement du circuit de gestion des alimentations en blocs fonctionnels qui seront décrits en faisant référence aux figures 5 à 11.

Dans le cas représenté en figure 4, non seulement le circuit de gestion effectue le partage du courant suivant les priorités montrées en figure 3, mais encore il fournit au reste du circuit intégré des informations sur le courant de ligne et sur la tension de ligne, exemptes des composantes alternatives qu'on obtiendrait en prélevant directement ces informations sur la ligne.

Pour cela il comporte une self-inductance électronique 32 dont la constitution de principe est donnée en figure 5, destinée à éliminer la composante alternative.

La self-inductance électronique 32 comporte un amplificateur différentiel 34 qui attaque un transistor bipolaire 36 monté en suiveur. Ce transistor est chargé par une résistance extérieure $R_e$ reliée à la tension de ligne, prélevée sur une broche $V_e$. L'entrée négative de l'amplificateur différentiel est rebouclée sur le transistor 36 et son entrée positive est reliée à la ligne par un condensateur extérieur $C_e$.

Le reste des circuits est modélisé sur la figure 5 par un multiplieur de courant 38 (multiplieur par 100 dans le mode de réalisation représenté) recevant le courant $I_m$ image de sortie de la self-inductance et par une consommation $I_{pol}$ sensiblement constante, d'environ 7 mA.

Dans cette hypothèse, l'analyse montre qu'à fréquence nulle le circuit se comporte comme une résistance $R_e/100$ en série avec une diode zener de valeur Vz calculable.

La caractéristique tension-courant du circuit s'écrit donc :

$$V_E = (R_e/100)I_L - I_{pol} + V_z$$

où $V_E$ désigne la tension positive de ligne et $I_L$ désigne le courant de ligne.

La pente de la caractéristique est donc ajustable à l'aide de la résistance extérieure Re, permettant d'adapter le circuit aux différents gabarits.

Le montage permet de réaliser une self-inductance de plusieurs henrys sous un volume très faible.

### Circuit de partage des courants

Les courants requis, illustrés en figure 3, comportent :

$I_{VCC}$, courant injecté dans les circuits logiques, limité à 4 mA.

$I_{trans}$, courant injecté dans la partie de transmission, de 6 mA en régime normal ; la fraction de ce courant nécessaire à l'émission est plus élevée que celle exigée pour la réception, du fait de la modulation qui exige, un courant supérieur ou égal à 3,6 mA pour remplir les conditions classiques à + 6 dBm sur 600 Ohms et s'effectuer correctement.

$I_{EA}$, courant injecté dans le circuit d'écoute amplifiée, qui ne reçoit que le surplus de courant non nécessaire aux fonctions essentielles ; lorsque le courant de ligne disponible $I_L$ est supérieur à 26 mA, tout le surplus de courant de ligne est fourni au circuit d'écoute amplifiée.

Le schéma de principe du circuit de partage des courants est donné en figure 6. Le montage utilise des "miroirs limiteurs" qui sont des circuits connus en eux-mêmes, à deux entrées et deux sorties, remplissant la fonction suivante :

- si l'intensité du courant sur une entrée est inférieure à la moitié d'une valeur de référence fournie sur l'autre entrée, la totalité du courant disponible est envoyée sur une première sortie ;
- dans le cas contraire, le courant sur la première sortie est maintenu à la moitié de la valeur de référence et le reste du courant est fourni sur la seconde sortie.

Le schéma de la figure 6 comprend deux miroirs limiteurs 40 et 42 dont les entrées de référence reçoivent respectivement des courants de 80 μA et 120 μA fournis par le générateur de courant externe de référence 43 (figure 4) associé à une résistance $R_{1ref}$ de valeur bien définie. Le courant image $I_m$ provenant de la self-inductance 32 est réfléchi dans deux miroirs 44 et 46 pour donner naissance à deux courants images, respectivement égaux à $2I_m/3$ et $I_m/3$, avec Im = $I_L/100$. La première sortie du miroir limiteur 40 fournit un courant $Icom_{Vcc}$ destiné à commander le cournt $I_{Vcc}$ d'alimentation des circuits logiques. La sortie du miroir limiteur 42 fournit le courant $I_{comtrans}$ de contrôle du courant de transmission $I_{trans}$. Le courant $I_{comEA}$ destiné à l'écoute amplifiée est la somme de ceux fournis sur les secondes sorties des deux miroirs limiteurs 40 et 42.

## Régulation d'efficacité

Le rôle du circuit de régulation d'efficacité 47 (figures 4 et 7) est de générer un courant $I_{cag}$ de commande de gain des différents amplificateurs ou mélangeurs dans le reste du circuit, en fonction d'une information représentant la longueur de ligne.

Jusqu'ici, on effectuait l'adaptation des gains sur les appareils une fois pour toutes, ce qui rendait notamment un appareil prévu pour le réseau français inadapté aux réseaux d'autres pays. Le circuit qui sera maintenant décrit utilise comme paramètre d'entrée l'image du courant de ligne et non pas la tension aux bornes du poste qui ne représente qu'imparfaitement la longueur de ligne, donc l'atténuation.

Le courant image $I_m$ traversant le transistor 36 est recopié dans le transistor 48 et des miroirs 50 et 52 créent, aux bornes d'une résistance r2, une tension Vr2:

$$Vr2 = (r2/r1)R_E.I_m$$

où r1 et $R_E$ sont respectivement une résistance de charge du transistor 48 et la résistance extérieure.

Cette tension Vr2 est reproduite en B par un second transistor 54 alimenté par un générateur de courant à partir de la tension de ligne $V_E$, avec un décalage correspondant à la tension base-émetteur du transistor.

Un circuit diode 55-résistance 56 charge le transistor 54. En agissant sur la résistance 56 de mise à la masse ou sur une résistance 58 qui reçoit la tension Vcc, on peut ajuster le seuil et la pente de la courbe de régulation d'efficacité en fonction du courant de ligne. On fait en effet varier ainsi la loi de variation de la tension efficace appliquée à la base du transistor 61 qui fournit sur sa sortie le courant $I_{cag}$, fonction du courant de ligne, qui est utilisé pour les commandes de gain. Ces commandes peuvent également être commandées à l'aide d'un circuit miroir 60 ayant des sorties de commande des gains 62.

## Générateurs de courants

De nombreuses caractéristiques électriques des circuits dépendent d'un courant ; il faut en conséquence disposer d'une part d'un courant stable et ne dépendant pas de la température, d'autre part -pour d'autres contrôles- d'un courant fonction des variations d'une résistance intégrée.

Pour cela, le circuit montré en figure 4 comprend un générateur de courant externe général 64 stabilisé en température et fournissant un courant A2 (figure 8) et un générateur de courant 66 fournissant un courant A1 qui change suivant la dispersion des résistances internes.

## Circuit d'alimentation de l'écoute amplifiée

Ce circuit 68 (figure 4) est commandé par le courant miroir $I_{comEA}$. Tel qu'il est montré en figure 8, il comprend un multiplieur par cent 70 suivi d'un montage anti-distorsion 72 et d'un régulateur shunt 74. Le montage anti-distorsion 72 évite la distorsion du signal en ligne, lorsque la dynamique de celui-ci est telle que ses alternances négatives viennent buter sur la tension régulée $V_{EA}$. Le régulateur shunt 74 fournit une tension $V_{EA}$ stabilisée, croissant lorsque la tension disponible aux bornes du circuit augmente. Le système anti-distorsion se compose de trois couches de transistors montées en cascade de façon que les pointes de signal soient écoulées à la masse pendant les crêtes de signal de parole, afin de ne pas distordre le signal présent sur la ligne. La tension $V_{EA}$ est asservie à la tension de ligne par un amplificateur 75 appartenant au régulateur de façon à avoir la valeur maximale disponible sans fluctuation indésirable. L'information de commande automatique de gain est prélevée à la sortie de l'amplificateur 75 du régulateur 74 et réduit le gain de l'amplificateur d'écoute amplifiée lorsque le courant fourni par la ligne n'est plus suffisant pour garantir une amplification non distordue.

Le transistor qui sert à injecter le courant $I_{EA}$ de création de la tension $V_{EA}$ doit fournir un courant important, donc occupe une surface importante sur un circuit intégré. Ce transistor, dédoublé sous forme des transistors 76 et 78 dans le cas du montage 72, a une tension collecteur-émetteur à saturation de l'ordre de 1,5 Volt. Grâce à l'écoulement à la masse du signal par le transistor 80 dès qu'on approche de la saturation, la distorsion en ligne est évitée. Cette dérivation permet au courant $I_{EA}$ de s'écouler à un potentiel inférieur à $V_{EA}$, évitant ainsi l'écrêtage.

## Circuit de fourniture de la tension logique Vcc

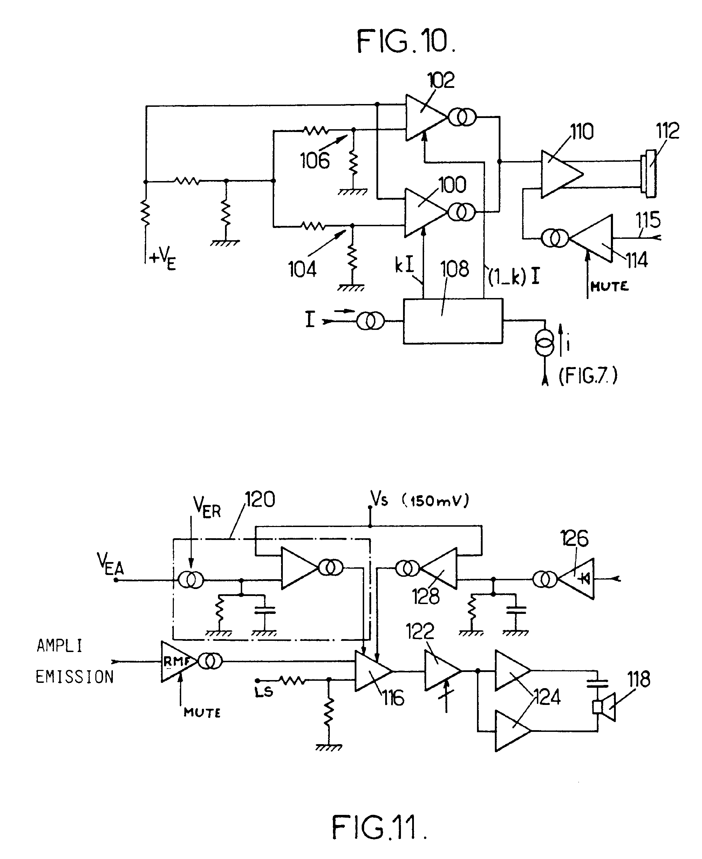

Ce circuit peut avoir la constitution montrée schématiquement sur la figure 9. Il comporte un multiplieur par cent 84 qui peut être identique au multiplieur 70. Le multiplieur 84 génère un courant $I_{Vcc}$ = 100 x $I_{comVcc}$ montré sur les figures 4 et 8. Il attaque, par l'intermédiaire d'un ensemble regroupant un générateur de courant et un transistor qui reçoit le signal $I_{Vcc}$, un interrupteur anti-décharge 86 qui est ouvert en l'absence de courant de ligne pour bloquer le fonctionnement du régulateur shunt 74. On évite ainsi que la capacité de stockage 98 contenue dans le circuit se décharge lors de l'ouverture de la ligne.

Un circuit comportant un comparateur 88 entre la tension de ligne et une tension de référence $V_s$ et un générateur de tension à coefficient de température pratiquement nul 89 permet de maintenir Vcc à une valeur différente suivant le courant, par exemple 2,5 Volt à faible courant et 3,5 Volt lorsque la tension $V_E$ atteint 4,6 Volts.

La tension Vcc est appliquée à une éventuelle logique extérieure 90 associée éventuellement à un microphone à électrets, la tension $V_{RAM}$ égale à VCC est appliquée à la mémoire vive 92 et à la logique interne via un interrupteur intégré 96. Dans le mode de réalisation montré en figure 9, un circuit d'accélération comportant un amplificateur de couant 94 permet d'accélérer la charge de la capacité de stockage 98 au démarrage en interdisant temporairement l'alimentation de la logique interne 99. On voit que la totalité du courant admis, d'intensité limitée du fait de la présence des autres composants, est appliqué à la capacité de stockage 98.

Un compteur 101 de 200 ms déclenché par un interrupteur commandé par l'amplificateur 94, provoque après une perte de courant de ligne supérieure à 200 ms, l'ouverture de l'interrupteur 96, laissant ainsi la totalité de la charge de la capacité 97 pour la sauvegarde du contenu de la mémoire vive 92.

Circuits de transmission

Les circuits de transmission comprennent une chaîne d'émission et une chaîne de réception.

La chaîne d'émission peut être classique ; il sera avantageux de la munir d'un dispositif de compression dynamique à l'émission et d'un circuit d'étouffement (anti-squelch) à effet de seuil permettant de diminuer le bruit de fond. On peut regarder les circuits d'appel à fréquence vocale comme appartenant à ce circuit. On trouvera un exemple de chaîne d'émission utilisable dans un dispositif suivant l'invention dans la demande de brevet FR-A- 2 567 344.

La chaîne de réception 10 amplifie les signaux reçus en ligne. Elle retourne également les signaux bi-fréquence émis en ligne pour permettre un contrôle auditif de la numérotation à fréquence vocale (DTMF).

Dans le mode de réalisation montré en figure 10, la chaîne réalise un mélange barycentrique permettant d'équilibrer les signaux de parole par ajustement de l'amplification dans deux bandes vocales différentes en tenant compte de l'affaiblissement provoqué par la ligne, qui varie avec la longueur et la fréquence. Un contrôle de cet affaiblissement est donnée par la valeur du courant de ligne.

Sur la figure 10, la chaîne de réception comporte deux préamplificateurs d'entrée 100 et 102 montés en parallèle, attaqués par l'intermédiaire de réseaux d'effet local différents, adaptées l'un 104 à une ligne courte, l'autre 106 à une ligne longue. Les gains des amplificateurs 100 et 102 sont commandés par un mélangeur barycentrique 108 auquel est appliqué le courant de contrôle I. La somme des courants provenant des préamplificateurs 100 et 102 est appliquée à un amplificateur de sortie 110 relié à l'écouteur 112.

Le circuit de retour du signal d'appel à fréquences vocales (DTMF) comprend un préamplificateur 114 qui reçoit un signal 115 prélevé sur l'amplificateur de la chaîne d'émission et qui présente une entrée de blocage recevant le signal "mute" validant ou inhibant le préamplificateur 114 selon que l'on est respectivement ou pas en numérotation FV.

Le mélangeur barycentrique 108 est constitué par un réseau à deux entrées et à deux sorties. L'une des entrées reçoit le courant I de commande des préamplificateurs 100 et 102. L'autre entrée reçoit un courant i venant du circuit de régulation d'efficacité, proportionnel au courant $I_{cag}$ de la figure 7. Le mélangeur fournit en sortie deux courants kI et (1-k)I, où k est un coefficient inférieur à 1 et égal à $i/I_O$ où ($I_O$ étant un courant de référence interne au mélangeur).

En cas de ligne longue, $I_{cag}$ = 0 donc i = 0 et seul le préamplificateur 102 est en fonction. Inversement, en cas de ligne très courte, seuls le réseau 104 et le préamplificateur 100 interviennent.

Chaîne d'écoute amplifiée et d'anti-larsen

La chaîne d'écoute amplifiée peut être prévue pour être commandée par le bus série dans le cas d'un appareil haut de gamme du genre montré en figure 1. Dans le cas d'un poste bas de gamme, la commande de gain est simplement ajustable par un potentiomètre monté en série entre l'une des deux sorties de réception et l'entrée d'écoute amplifiée.

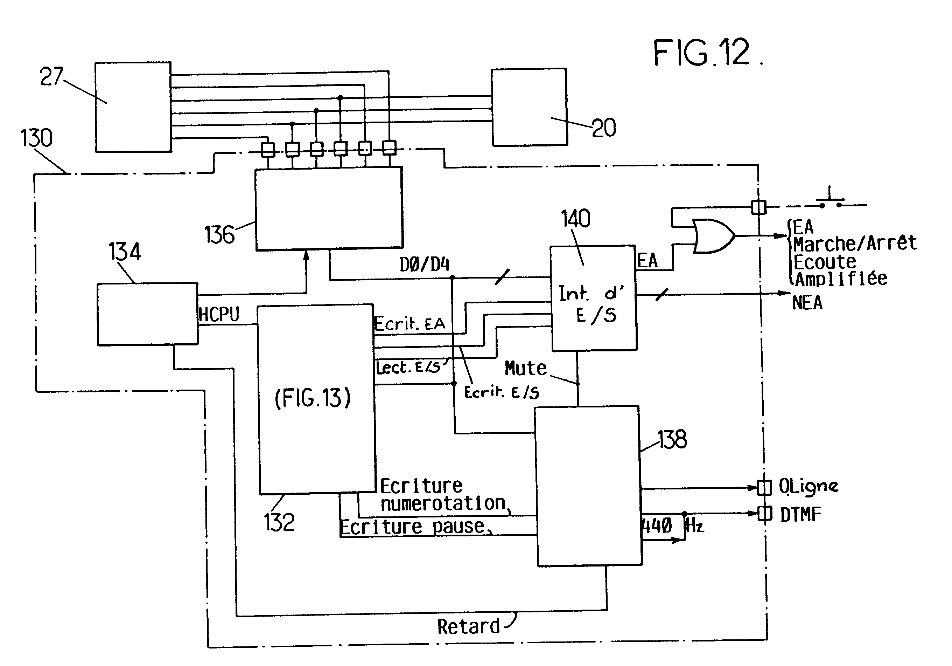

Dans le circuit montré en figure 11, La chaîne comprend un préamplificateur 116 commandé par les systèmes anti-larsen et anti-distorsion que l'on décrira plus loin pour réaliser l'atténuation nécessaire. Elle comprend une entrée principale reliée à l'arrivée de signal de parole LS et une entrée auxiliaire qui n' est en fonction que lorsque le signal "mute" (figure 10) est au niveau 1. Cette seconde entrée permet d'aiguiller le signal d'appel à fréquence vocale vers le haut-parleur 118 sans passer par la sortie réception et les capacités de liaison avec l'entrée principale d'écoute amplifiée. Le passage de l'entrée principale à la seconde s'effectue en portant au maximum l'effet de blocage du système anti-distorsion 120, pour atténuer au maximum le signal appliqué sur l'entrée principale.

Le préamplificateur 122 monté en cascade avec le préamplificateur 116 permet d'ajuster le niveau d'écoute. Tel que représenté, ce préamplificateur est ajustable par une entrée parallèle sur trois bits 124.

Le signal de sortie du préamplificateur 122 attaque le haut-parleur 118 par l'intermédiaire de deux amplificateurs 124 montés en pont.

La mise hors fonction de l'ensemble du circuit d'écoute amplifiée s'effectue en coupant le générateur de courant principal (non représenté) qui alimente la chaîne.

Le principe du système anti-larsen apparaît sur la figure 11 : un signal prélevé dans la chaîne d'émission est appliqué à un redresseur 126. La tension redressée obtenue est comparée à la tension de référence $V_s$ = 150 mV qui sert également de référence dans le système anti-distorsion 120. Lorsque la tension prélevée présente, après redressement, une valeur supérieure à la tension de référence $V_s$, le comparateur 128 fournit un courant qui commande le préamplificateur 116 dans le sens d'une atténuation du gain.

La partie analogique comprend encore des circuits de sonnerie, destinés à détecter les appels entrant et à émettre un signal audible. Ces circuits de sonnerie pouvant avoir une constitution classique, ils ne seront pas décrits en détail ici.

## PARTIE LOGIQUE

La partie logique peut avoir une constitution d'ensemble du genre montré sur le synoptique de la figure 12. Cette partie logique 130 peut être regardée comme comprenant :
- un séquenceur 132,
- un circuit d'horloge 134,
- un bloc d'acquisition des données 136,
- une numéroteur 138, et
- une interface d'entrée/sortie 140.

On verra que la partie logique est partiellement réalisée en logique cablée et partiellement micro-programmée, de façon à répondre à deux impératifs dans une large mesure contradictoires. Une programmation cablée permet d'obtenir une compacité maximale, mais elle fige les caractéristiques. Cette quasi-impossibilité de modifier les caractéristiques est acceptable pour diverses fonctions, par exemple la scrutation du clavier et la numérotation. Par contre, il est nécessaire de garder une possibilité d'adaptation pour d'autres fonctions qui seront en conséquence programmées en logiciel sur des mémoires. Il faut encore remarquer que les blocs élémentaires constituant la partie logique ont un fonctionnement indépendant et asynchrone au niveau des tâches permettant en particulier une grande souplesse d'adaptation.

On décrira maintenant les différents composants énumérés ci-dessus.

## Séquenceur

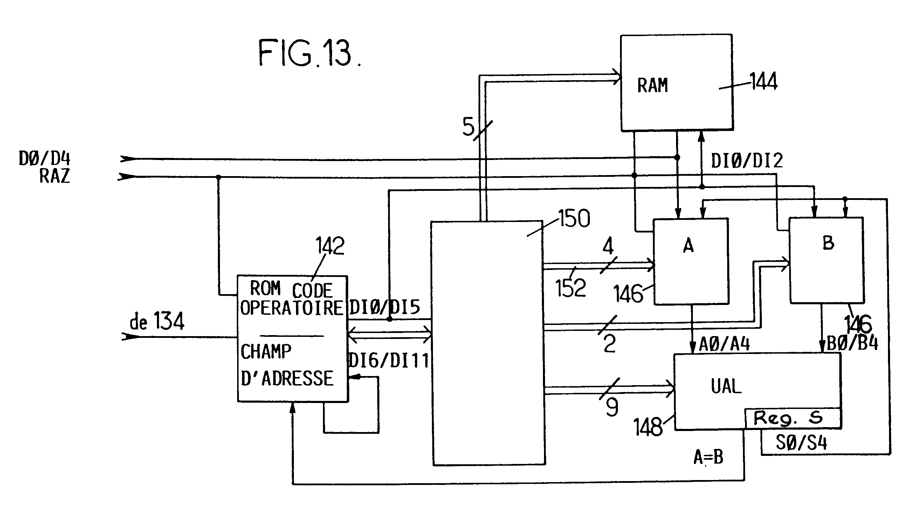

Le séquenceur 132 a pour fonction d'établir des liaisons entre les blocs constitutifs de la partie logique en fonction de micro-séquences contenues dans une mémoire morte qu'il incorpore. Il peut notamment avoir la constitution montrée schématiquement en figure 13. Sur cette figure une unité centrale comporte une mémoire morte micro-programmée 142, une mémoire vive 144, deux accumulateurs 146 (accumulateurs A et B) et une unité arithmétique et logique 148. Un bus de données à 12 bits DI0-DI11 relie les composants. Un décodeur d'instructions 150 reçoit les bits DI0-DI5 de la mémoire morte 142. Les bits DI6 à DI11 sont rebouclés sur le champ d'adresse de la mémoire morte 142.

Le micro-séquenceur fonctionne à la cadence de l'horloge 134 (figure 12). La mémoire morte 142 contient le logiciel du circuit sous forme d'instructions sur 12 bits constituées d'un code opératoire de 6 bits DI0-DI5 et d'un champ d'adresse de 6 bits DI6-DI11 qui pointe sur l'adresse suivante en mémoire de sorte que le séquenceur est auto-adressé.

La mémoire vive 144 est sauvegardée par une capacité extérieure (non représentée) permettant de retenir le contenu de la mémoire pendant une durée de quelques dizaines de minutes.

Les accumulateurs 146 sont constitués par deux registres. L'un des deux (accumulateur A sur la figure 13) est un registre de travail à 5 bits, pouvant être chargé à partir d'un bus de données unidirectionnel 152 ou à partir d'un registre résultat de l'UAL 148 (ligne $S_0$-$S_4$). Il contient les résultats des opérations effectuées sur le bus de données. L'accumulateur désigné par B contient le code instruction ou le résultat fourni par l'UAL.

L'UAL possède deux entrées et une sortie. Elle effectue des opérations sur les accumulateurs 146 et range les résultats dans un registre de sortie S. Elle permet notamment de fournir en sortie l'une ou l'autre des entrées, d'incrémenter le contenu des accumulateurs, de les remettre à zéro et surtout de comparer le contenu des deux accumulateurs en fournissant une sortie égale au complément de leur somme logique S = A + B. La sortie A = B contient le résultat des opérations de test et de comparaison ; elle est à 1 si le résultat du test ou de la comparaison est "vrai" et incrémente alors le champ d'adresse de la mémoire morte 142.

Le décodeur d'instructions 150 convertit les codes en signaux adaptés et commande les autres blocs du système.

L'horloge 134 peut avoir une constitution classique et ne sera donc pas décrite.

Le clavier 27 permet l'acquisition de données qui, dans une application de haut niveau, peut également s'effectuer par le bus série 20. Sur la figure 12, le clavier est relié au bloc d'acquisition de données 136 par six fils, permettant le raccordement des douze touches usuelles de numérotation ainsi que des touches "bis", "pause" et "rappel d'enregistrement". La scrutation peut s'effectuer de façon classique, à une cadence fixée par l'horloge 134.

NUMEROTEUR

Le numéroteur 138 incorporé à la partie logique montrée en figure 12 peut être du type mixte, permettant l'appel sous forme décimale ou à fréquences vocales. Il peut avoir une constitution connue, avec une sortie d'ouverture de ligne OL et une sortie de numérotation à fréquence vocale, désignée par DTMF sur la figure 12.

INTERFACE D'ENTREES-SORTIES

L'interface d'entrées-sorties 140, qui sera prévu sur le circuit intégré lorsque l'appareil est prévu pour être relié à un bus série 20, est destiné à établir les liaisons avec l'extérieur en fonction des informations contenues sur le bus interne du séquenceur. Cet interface peut avoir une constitution relativement classique et pour cette raison ne sera pas non plus décrit en détail.

**Revendications**

1. Circuit intégré pour appareil téléphonique à télé-alimentation comprenant un combiné téléphonique, ledit circuit permettant d'assurer au moins les fonctions de transmission, de génération des signaux de numérotation (138) d'appel sortant et de réagir aux appels entrant,

   caractérisé en ce qu'il comprend des moyens (32, 40,42,43,44, 46, 64,66) de gestion du courant de ligne disponible ($I_1$) assurant en priorité les fonctions logiques nécessaires au fonctionnement, puis les fonctions de transmission, en affectant de façon prioritaire la majeure partie du courant de ligne disponible ($I_1$) aux fonctions logiques et une fraction plus faible aux fonctions de transmission, jusqu'à ce que le courant nominal ($I_{vcc}$) d'alimentation des fonctions logiques soit atteint, le courant en surplus étant affecté à l'écoute amplifiée éventuelle et en ce qu'il comporte une partie analogique constituée, en majeure partie au moins, en technologie bipolaire, et une partie logique/numérique (130) constituée, en majeure partie au moins, en technologie C-MOS, portées par un même circuit intégré en technologie bi-MOS.

2. Circuit selon la revendication 1, caractérisé en ce qu'il est muni de moyens d'ajustement permettant d'adapter les caractéristiques courant-tension au gabarit du réseau.

3. Circuit selon l'une quelconque des revendications précédentes, caractérisé en ce que lesdits moyens de gestion du courant de ligne comprennent une self-inductance électronique (32) reliée à la ligne et fournissant un signal de sortie représentatif de la tension de ligne et filtré et en ce que ledit signal de sortie est utilisé pour commander le gain de moyens d'amplification.

4. Circuit selon la revendication 3, caractérisé en ce qu'il comprend des moyens (56,58) réglage de la pente de commande de gain et de seuil en courant de ligne à partir de l'extérieur.

5. Circuit selon l'une quelconque des revendications 1 à 4, caractérisé en ce que la partie analogique comporte lesdits moyens de gestion, ainsi que les moyens de transmission de sonnerie et éventuellement d'écoute amplifiée et d'anti-larsen (116,122,126,120,128).

6. Circuit selon l'une quelconque des revendications 1 à 4, caractérisé en ce que la partie logique/numérique assure des fonctions d'acquisition de données, de numérotation et d'interface d'entrées/sorties.

**Patentansprüche**

1. Integrierte Schaltung für einen ferngespeisten Fernsprechapparat mit einem Hörer, wobei die Schaltung mindestens die Funktionen des Übertragens, des Erzeugens von Rufnummer-Signalen (132) und des Reagierens auf Anrufe sicherstellt, **dadurch gekennzeichnet, daß** sie Steuerungsvorrichtungen (32, 40, 42, 43, 44, 46, 64, 66) für den Strom der verfügbaren Leitungen ($I_1$) umfaßt, der vor allem die notwendigen logischen Funktionen für den Betrieb und dann die Funktionen des Übertragens sicherstellt, durch die vorrangige Verwendung des größten Teils des Stromes der verfügbaren Leitung ($I_1$) für die logischen Funktionen und eines geringeren Anteils für die Funktionen der Übertragung, bis der Nominalstrom ($I_{vcc}$) zur Versorgung der logischen Funktionen erreicht ist, wobei der überschüssige Strom gegebenenfalls für den verstärkten Hörer verwendet wird, und wobei der Schaltung einen Analogteil aufweist, der mindestens zum größeren Teil eine bipolare Technologie umfaßt und einen logischen/numerischen Teil (130), der mindestens zum größeren Teil eine C-MOS Technologie umfaßt, die von einer gleichen integrierten Schaltung in bi-MOS Technologie getragen wird.

2. Schaltung nach Anspruch 1, **dadurch gekennzeichnet, daß** er mit einer Angleichungsvorrichtung versehen ist, mit der die Strom-Spannungs-Charakteristiken dem Netz angepaßt werden können.

3. Schaltung nach einem der vorangegangenen Ansprüche, **dadurch gekennzeichnet, daß** die Steuerungsvorrichtungen für den Leitungsstrom eine Selbstinduktions-Elektronik (32) umfassen, die mit der Leitung verbunden ist und ein Ausgangssignal liefern, das der Spannung der Leitung entspricht und gefiltert ist, wobei das Ausgangssignal zur Steuerung des Verstärkungsfaktors der Verstärkungsvorrichtung verwendet wird.

4. Schaltung nach Anspruch 3, **dadurch gekennzeichnet, daß** sie Vorrichtungen zum Regeln (56, 58) des Anstieges der Verstärkungssteuerung und der Schwelle in Abhängigkeit vom Leitungsstrom von außen umfaßt.

5. Schaltung nach einem der vorangegangenen Ansprüche 1 bis 4, **dadurch gekennzeichnet, daß** der Analogteil sowohl die Steuerungsvorrichtungen wie auch die Übertragungsvorrichtungen des Läutwerks und ggfs. des verstärkten Hörers und des Anti-Larsen-Systems (116, 122, 126, 120, 128) umfaßt.

6. Schaltung nach einem der vorangegangenen Ansprüche 1 bis 4, **dadurch gekennzeichnet, daß** der logische/ numerische Teil die Funktionen des Datenempfangens, des Wählens und des Interfaces von Ein- und Ausgang sicherstellt.

**Claims**

1. An integrated circuit for a remotely-powered telephone set comprising a telephone handset, said circuit allowing the performance of at least the functions of communication, dialling outgoing calls (132) and reacting to incoming calls,
   characterized in that it comprises means (32,40,42,43,44,46, 64,66) for managing the available current ($I_1$) to ensure with priority the logic functions required for operation, then the communication functions, by assigning with priority the major proportion of the available line current ($I_1$) to the logic functions and a smaller fraction to the communication functions, until the nominal supply current ($I_{Vcc}$) of the logic functions is reached, the surplus current being assigned to possible amplified listening, said circuit also comprising an analogue part formed at least for the most part by bipolar technology, and a logic/digital part (130) formed at least for the most part by CMOS technology borne by a common integrated circuit in bi-MOS technology.

2. A circuit according to Claim 1, characterized in that it is provided with adjustment means enabling the current/voltage characteristics to be adapted to the standard of the network.

3. A circuit according to either of the preceding Claims, characterized in that said means for managing the line current comprises an electronic self-inductance (32) connected to the line and supplying a filtered output signal which represents the line voltage, said output signal being used to control the gain of amplification means.

4. A circuit according to Claim 3, characterized in that it comprises means (56,58) for adjusting the threshold and slope of the gain control in relation to the line current.

5. A circuit according to any of Claims 1 to 4, characterized in that the analogue part comprises said management means and also the means for the transmission of ringing and possibly amplified listening and anti-Larsen effect (116,122,126,120,128).

6. A circuit according to any of Claims 1 to 4, characterized in that the logic/digital part ensures the functions of data collection, dialling and inputs/outputs interface.

FIG.1.

FIG.2.

FIG.3.

FIG.5.

FIG.6.

FIG. 4.

FIG. 9.

FIG.7.

FIG.8.

# FIG.10.

# FIG.11.

FIG.12.

EP 0 328 462 B1

FIG.13.